# FASCICULE DE BREVET EUROPEEN

(11) **EP 0 462 900 B1**
(45) Date de publication et mention de la délivrance du brevet: **05.05.1993**
(21) Numéro de dépôt: 91401667.0
(22) Date de dépôt: 20.06.1991
(51) Int. Cl.: B60N 3/14

(54) **Corps d'allumage pour allume-cigares, notamment pour véhicules automobiles et ensemble corps d'allumage-bague éclairante comportant un tel corps d'allumage**
Zigarettenanzünderkörper, insbesondere für Kraftfahrzeuge und der Aufbau eines leuchtenden Anzünderkörperringes mit einem solchen Anzünderkörper
Cigarette lighter body especially for motor vehicles and the assembly of a bright lighter body ring with such a lighter body

(30) Priorité: 21.06.1990 FR 9007796
(43) Date de publication de la demande: 27.12.1991
(73) Titulaire: VALEO VISION, 93012 Bobigny Cédex (FR)
(72) Inventeur: Lagier, Daniel, F-92000 Nanterre (FR); Mallet, Christian, F-91490 Milly-la-Foret (FR)
(74) Mandataire: Gamonal, Didier

(56) Documents cités:
- EP-A- 0 387 773
- DE-U- 8 903 941
- FR-A- 2 444 587
- FR-A- 2 630 057

## Description

La présente invention concerne les allume-cigares, notamment pour véhicules automobiles, et se rapporte plus particulièrement au corps d'allumage ainsi qu'à l'ensemble bague éclairante-corps d'allumage, que comporte celui-ci et à un procédé de montage d'un tel ensemble.

Un tel allume-cigares est décrit par exemple dans le document FR-A-2 630 057 et comporte (figure 1) un corps d'allumage 1 solidaire d'une partie fixe du véhicule automobile, usuellement par une bague 7 conductrice de lumière.

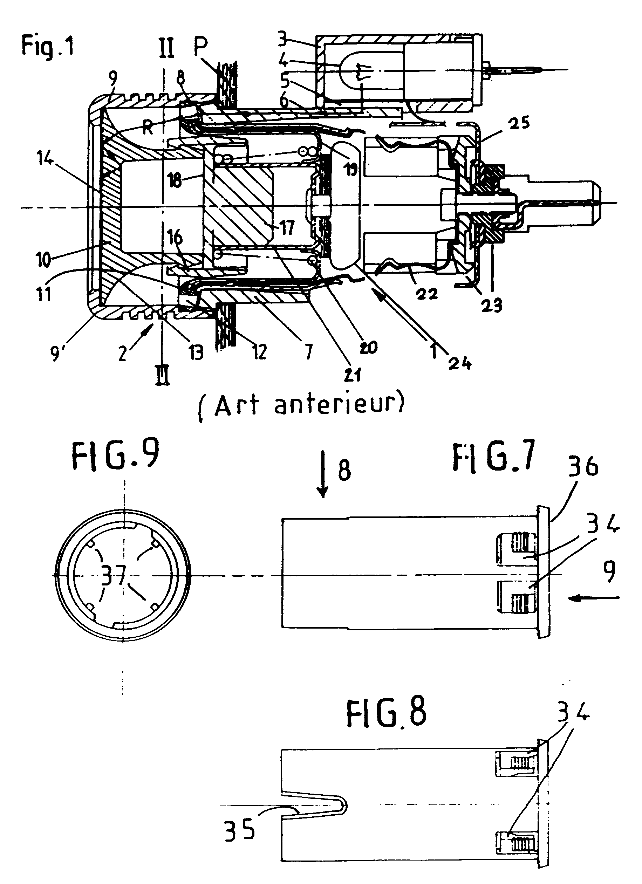

Un bouchon 2 est logé dans le corps 1 et porte à son extrémité libre une résistance chauffante logée dans une coupelle 24 et propre à coopérer avec un élément bi-métallique 22 solidaire du corps 1 (à la figure 1 par vissage) avec intervention de rondelles d'isolement électrique 23. L'une des rondelles 23 traverse une ouverture pratiquée dans le fond 25 du corps 1.

L'élément bi-métallique 22 a la forme globalement d'un U, dont le fond sert d'appui à la vis de fixation traversant les rondelles 23 et le fond 25. Cette vis sert à la fixation d'une première cosse d'alimentation propre à être reliée ici à la borne positive de la batterie.

Le corps 1 porte également une deuxième cosse propre à être reliée à la borne négative de la batterie, ladite seconde cosse étant en contact avec le fond 25 en étant serrée entre ledit fond 25 et la rondelle d'isolement 23 concernée.

L'allume-cigares est éclairé par une ampoule 4 logée dans une boîte 3 solidaire de la bague 7. L'alimentation électrique de l'ampoule 4 est réalisée grâce à une troisième cosse et à une languette élastique traversant une ouverture pratiquée dans la bague 7 pour venir en contact avec le corps 1 métallique.

Cette disposition, bien que donnant satisfaction, présente des inconvénients. En effet, la boîte 3 fait saillie latéralement par rapport à la bague 7 et au corps 1, en sorte que le montage s'effectue par introduction en biais et redressement de la bague 7 avec sa boîte 3, puis par montage du corps 1. Ainsi, il n'est pas possible, sans modification, de monter par enfilage axial à travers la paroi fixe P le corps 1 et l'ampoule 4. Bien sûr, on peut modifier le trou de la paroi P traversé par le corps d'allumage, en entaillant celui-ci pour permettre le passage de la boîte 3. Une telle disposition est inesthétique, en outre elle permet de manière dangereuse le passage d'objets à travers ladite échancrure.

De plus, les connexions électriques font appel à une patte élastique qui complique la réalisation.

La présente invention a pour objet de pallier ces inconvénients, et donc de créer un nouvel ensemble corps d'allumage-ampoule d'éclairage permettant un montage par enfilage axial à travers une paroi fixe, tout en simplifiant les connexions électriques et en procurant d'autres avantages.

Suivant l'invention un corps d'allumage du type sus-indiqué selon FR-A-2 630 057, c'est-à-dire un corps d'allumage pour allume-cigares, du genre comportant pour son alimentation en énergie électrique une première et une seconde cosses, est caractérisé en ce qu'il porte une ampoule d'éclairage avec ses deux pièces d'alimentation électrique, en ce que l'ampoule et ses deux pièces d'alimentation sont implantées au voisinage de la première et de la deuxième cosses à l'intérieur du contour transversal hors-tout de la partie principale du corps d'allumage, et en ce que l'une des première et seconde cosses d'alimentation est prolongée pour constituer l'une des pièces d'alimentation de l'ampoule.

Grâce à l'invention, l'ampoule est solidaire du corps d'allumage et ne fait pas saillie par rapport à la périphérie externe du corps d'allumage, en sorte qu'il est possible de monter automatiquement, par exemple à l'aide d'un robot, ledit corps ainsi équipé par simple enfilage axial à travers un trou de la paroi P de taille complémentaire à celui de la bague éclairante. Cette disposition favorise la création d'un sous-ensemble corps d'allumage-ampoule bague éclairante manipulable et transportable. Pour cela, il suffit de prévoir des moyens de prépositionnement entre la bague et le corps d'allumage. Grâce à ceci, le nombre de pièces à stocker avant montage est réduit et les risques d'erreurs ou de confusions sont éliminés.

Grâce à l'invention, on simplifie également les connexions électriques, l'alimentation de l'ensemble étant réalisé à partir de trois pièces et non de quatre, comme dans l'art antérieur. De plus, le faisceau d'alimentation est simplifié ainsi que le dispositif de connexion, puisque toutes les pièces d'alimentation sont voisines les unes des autres.

On appréciera que la boîte de logement de l'ampoule est supprimée, que la paroi du véhicule n'est pas modifiée et qu'aucun soudage n'est nécessaire pour les connexions.

Suivant une autre caractéristique, l'ampoule est supportée par ses pièces d'alimentation conformées à cet effet. Cette disposition permet un changement aisé de lampe.

Toutes ces dispositions sont particulièrement avantageuses, en combinaison avec un isolement électrique des cosses appartenant à un corps d'un connecteur. Il est possible alors d'entailler le corps du connecteur pour loger la lampe et immobiliser les cosses et l'autre pièce d'alimentation de l'ampoule.

Avantageusement, les pièces d'alimentation de l'ampoule appartiennent à des pièces comportant deux bras, ou pattes, s'étendant parallèlement à l'axe de l'ensemble, l'un pour réaliser la connexion, l'autre pour réaliser l'alimentation de l'ampoule. Ceci permet d'avoir un bras d'alimentation de l'ampoule élastique pour immobilisation de ladite ampoule. Pour ce faire ledit bras comporte une griffe de retenue.

La description en annexe illustre l'invention en référence aux dessins annexés dans lesquels:
- la figure 1 est une vue en coupe axiale d'un allume-cigares de l'art antérieur;
- la figure 2 est une vue en bout de l'allume-cigares selon l'invention;
- la figure 3 est une vue en coupe selon la ligne A-A de la figure 2;
- la figure 4 est une vue analogue à la figure 3, sans le bouchon de l'allume-cigares montrant l'implantation de l'ampoule selon l'invention;
- la figure 5 est une vue en coupe selon la ligne D-D de la figure 4;
- la figure 6 est une vue en coupe selon la ligne E-E de la figure 4;
- la figure 7 est une vue de la bague éclairante;
- la figure 8 est une vue selon la flèche 8 de la figure 7;
- la figure 9 est une vue selon la flèche 9 de la figure 7;
- la figure 10 est une vue partielle en perspective avec arrachement local montrant le connecteur du corps d'allumage équipé de l'ampoule selon l'invention;
- la figure 11 est une vue en perspective montrant l'une des pièces d'alimentation de l'ampoule selon l'invention;
- la figure 12 est une vue analogue à la figure 11 montrant en perspective la seconde pièce de l'alimentation de l'ampoule;
- la figure 13 est une vue en coupe montrant les moyens de prépositionnement agencés entre le corps d'allumage et la bague éclairante;
- la figure 14 est une vue en bout de l'allume-cigares pour un second exemple de réalisation;
- la figure 15 est une vue en coupe selon la ligne A-A de la figure 14, sans le bouchon;
- la figure 16 montre l'allume cigare en position de livraison pour le mode de réalisation des figures 14 et 15;
- la figure 17 est une vue analogue à la figure 10, pour cette deuxième réalisation;
- la figure 18 est une vue en élévation de la cosse de masse pour cette deuxième réalisation;
- la figure 19 est une vue du dessus de la cosse de masse;
- les figures 20 et 21 sont des vues analogues aux figures 18 et 19, pour la cosse positive d'alimentation de la lampe;
- la figure 22 est une vue analogue à la figure 13, pour cette deuxième réalisation; et
- la figure 23 est une vue en perspective de la cosse de masse.

Dans ces figures, on n'a représenté que les parties utiles à l'invention. Pour les autres détails on se reportera par exemple au susmentionné document FR-A-2 630 057 sachant que la figure 1 correspond à l'identique à la figure 1 du susmentionné document.

Pour mémoire on signalera, lorsque l'on enfonce le bouchon à l'intérieur du corps d'allumage, que la coupelle 24 est admise à coopérer avec le bilame 22 pour chauffage de la résistance chauffante entourée par ladite coupelle 24. Un circuit électrique est alors établi par l'intermédiaire de la première cosse, du bilame 22, de la coupelle 24 avec sa résistance chauffante, de la paroi conductrice du bouchon 2, du corps d'allumage 1 et de la seconde cosse.

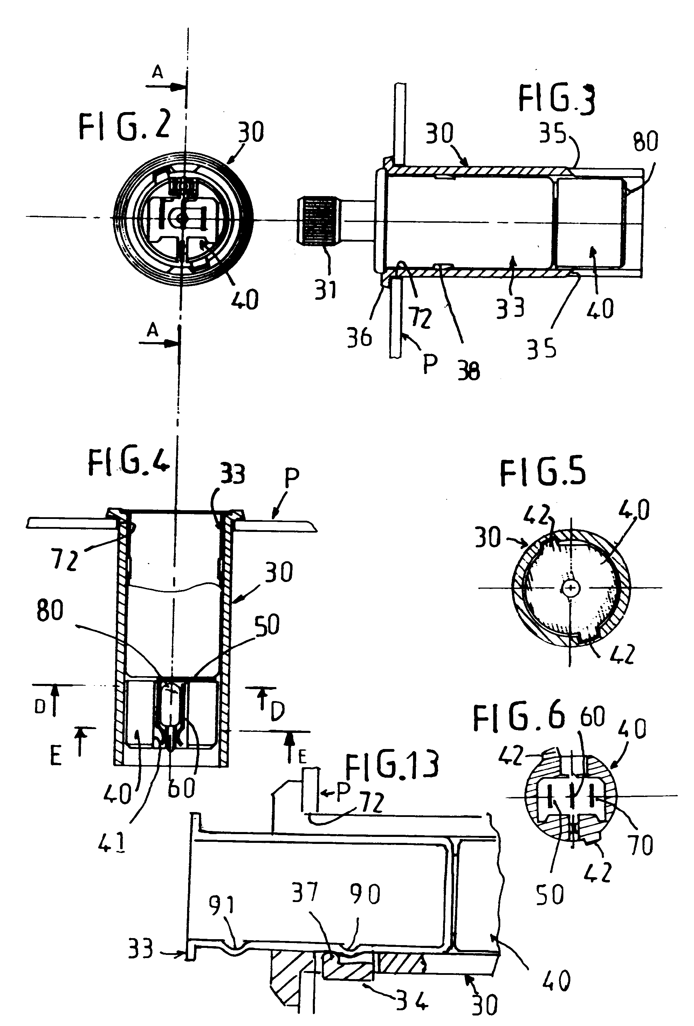

Dans les figures 2 à 13, on a représenté en 30 la bague éclairante de l'allume-cigares, en 31 le bouchon de celui-ci, et en 33 le corps d'allumage entouré de manière complémentaire par la bague 30. Le trou de la paroi P porte la référence 72. La bague 30 étant ici de forme cylindrique à section circulaire et le trou 72 est ici circulaire avec un diamètre correspondant, avec un jeu de montage, à celui de la bague 30 pour passage de celle-ci.

La première cosse d'alimentation de l'allume-cigares propre à être reliée à la borne positive de la batterie du véhicule automobile et au bilame 22, porte dans ces figures 2 à 13 la référence 70, tandis que la deuxième cosse propre à être reliée à la borne négative de la batterie et au corps d'allumage 33 métallique porte la référence 50, et l'ampoule électrique la référence 80. L'ampoule 80 est alimentée électriquement à partir de deux pièces d'alimentation électrique 51,61.

Suivant l'invention un allume-cigares du type sus-indiqué est caractérisé en ce qu'il porte une ampoule d'éclairage 80 avec ses deux pièces d'alimentation électrique 51,61, en ce que l'ampoule 80 et ses deux pièces d'alimentation 51,61 sont implantées au voisinage de la première 70 et de la seconde 50 cosses d'alimentation à l'intérieur du contour transversal hors-tout de la partie principale du corps d'allumage, et en ce que l'une des pièces d'alimentation de l'ampoule 80 est constituée par l'une desdites première et seconde cosses 70,50 prolongée à cet effet.

A l'intérieur du contour transversal hors-tout, on entend ici que l'ampoule 80 avec ses pièces 51,61 ne fait pas saillie transversalement par rapport à une enveloppe délimitant la périphérie externe de la partie principale du corps d'allumage 33 situé d'un côté de la paroi P. Cette définition exclut donc la collerette d'extrémité du corps 33 située de l'autre côté de la paroi P et propre à coopérer avec la collerette 36 de la bague 30. Le corps 33 étant ici de forme cylindrique, l'ampoule 80 avec ses pièces 51,61 est donc logée à l'intérieur d'un cylindre de diamètre correspondant à celui de la périphérie externe de la partie principale du corps d'allumage 33.

Ainsi l'ampoule 80 avec son corps d'allumage 33 peut être montée à l'intérieur de la bague éclairante 30 par simple enfilage axial du corps 33 dans la bague 30, ladite bague 30 étant enfilée dans le trou 72, pour montage de l'ensemble corps d'allumage 33-bague 30, de manière décrite ci-après. Cette bague 30 en matériau transmettant la lumière est plus longue axialement que l'ensemble corps d'allumage 33-ampoule 80 (figures 3 et 4) et présente à son extrémité de fixation une collerette 36 formant épaulement pour appui sur la paroi P fixe, telle que le tableau de bord du véhicule automobile.

A son autre extrémité, la bague 30 présente deux échancrures 35 diamétralement opposées et allongées axialement, dont l'une est en regard de l'ampoule 80.

Au voisinage de la collerette 36, la bague 30 présente des pattes 34 striées. Ces pattes 34, ici au nombre de quatre sont dotées intérieurement de bossages 37. Ainsi lorsque l'on introduit le corps 33 à l'intérieur de la bague 30, les pattes 34 sont admises à se soulever par coopération des bossages 37 avec le corps 33 et à ainsi immobiliser axialement la bague 30 par coopération d'une part, de la collerette 36 avec la paroi P, et d'autre part, coopération des pattes 34 avec ladite paroi P.

Pour immobilisation du corps d'allumage par rapport à la bague 30, il est prévu des moyens d'immobilisation 38 (figure 3) sous forme de trous pratiqués dans le corps 33 et de bossages pratiqués dans l'alésage interne de la bague 30 et propre à coopérer avec lesdits trous. Ces dispositions sont usuelles, deux trous et deux bossages diamétralement opposés étant prévus.

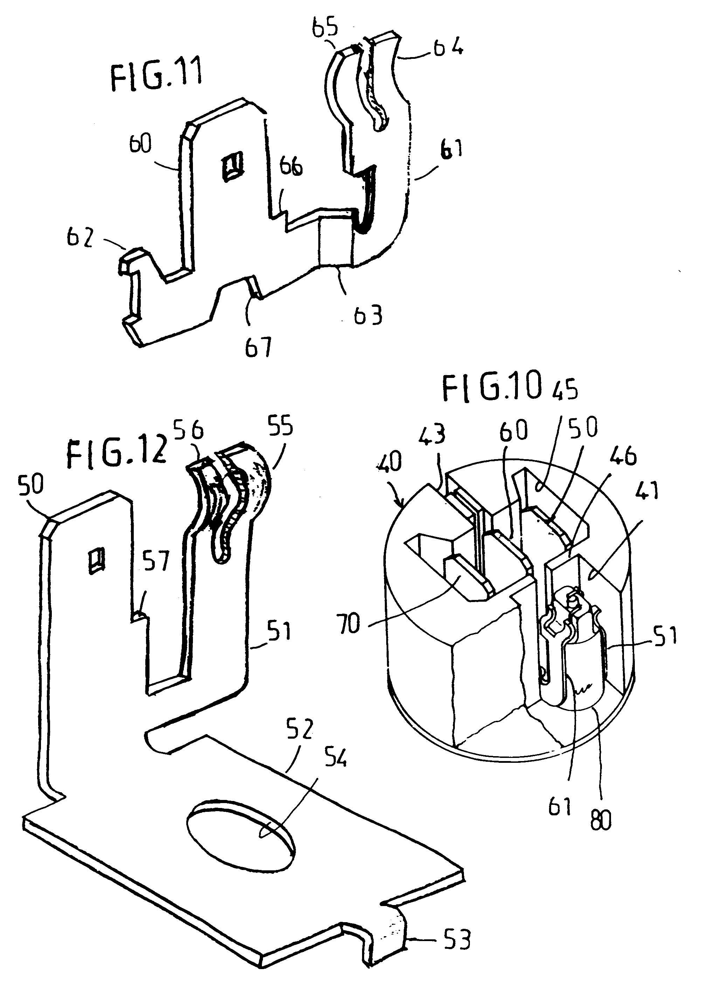

Dans ces figures, la deuxième cosse 50 a une fonction double et c'est elle qui relie d'une part, le corps d'allumage 33, et d'autre part, l'ampoule 80 à la masse. La seconde cosse 50 (figure 12) appartient à une plaquette métallique conductrice pliée en équerre avec une partie verticale dotée de deux bras, ou pattes, parallèles 50,51 et une partie horizontale 52. Le bras 51 appartient à une potence d'un seul tenant avec le bras 50. C'est le bras 51 qui sert de pièces d'alimentation à l'ampoule 80, ainsi que suivant une caractéristique à l'immobilisation de celle-ci. Pour ce faire, ce bras 51 présente à son extrémité libre une griffe avec deux pattes 55,56 séparées par une fente. Ces pattes 55,56 sont bombées et sont conformées pour coopérer avec l'ampoule 80.

On notera que ce bras 51 est élastique du fait qu'il appartient à une potence d'un seul tenant avec le bras 50 plus large que ledit bras 51. Ce bras 50 constitue une cosse mâle propre à recevoir une cosse femelle complémentaire liée au faisceau d'alimentation électrique, pour alimentation en énergie électrique de l'allume-cigares.

Pour limiter l'enfoncement de la cosse femelle, la cosse 50 présente un épaulement 57. La partie horizontale 52 présente un trou 54 pour passage à isolation électrique, des organes de fixation (une vis ou un rivet) reliant le bilame 22 à la première cosse 70. Cette partie horizontale 52 est en contact direct avec le fond 25 du corps 33 et présente une patte 53 s'engageant dans une ouverture complémentaire pratiquée dans le fond 25 pour immobilisation en rotation de la seconde cosse 50.

La seconde pièce d'alimentation 61 de l'ampoule 80 est formée également à partir d'une plaquette métallique conductrice comportant deux bras parallèles 60,61. La conformation des bras 60 et 61 est analogue à celle des bras 50 et 51, ceux-ci s'étendant axialement parallèlement à l'axe de l'allume-cigares.

Ainsi le bras 60 forme une cosse mâle propre à coopérer avec une cosse femelle du faisceau d'alimentation, ladite cosse 60 étant épaulée en 66 pour limiter l'engagement axial de la cosse femelle complémentaire et consistant ici en une languette.

On notera que les deux cosses 50,60 sont dotées chacune d'un trou de manière usuelle d'accrochage de la cosse femelle correspondante.

Le bras 61, moins large que le bras 60, est élastique et appartient à une potence d'un seul tenant avec la cosse 60. Ce bras 61 s'étend parallèlement au bras 60 mais ici il est décalé axialement par rapport audit bras 60, à la faveur d'un pli 63 pratiqué dans la partie horizontale de la potence.

L'extrémité libre du bras 61 forme une griffe avec deux pattes bombées 64,65 séparées par une fente.

Après montage dans un connecteur 40 décrit ci-après, les deux bras 61,51 sont parallèles avec leur griffe ayant une concavité inverse l'une de l'autre et l'ampoule 80 est insérée à serrage élastique entre ses deux bras 51,61 (figure 10).

Les griffes 64,65 ; 55,56 sont propres à coopérer avec la zone d'alimentation de l'ampoule 80 ici sans culot, ladite zone comportant deux fils dont l'un coopère avec la patte 64, et dont l'autre coopère avec la patte 56. Ainsi les pattes des griffes sont différenciées, l'une 55,65 formant pattes d'alimentation, l'autre 56,64 formant pattes d'immobilisation. L'ampoule 80 est ainsi maintenue par serrage élastique entre les deux bras 61,51, et son montage se fait par simple enfilage axial conduisant à un écartement des bras favorisé par la conformation des pattes 55,56 ; 64,65, puis à un resserrement des bras, lorsque les griffes viennent en regard de la zone d'alimentation de largeur réduite par rapport à la partie courante de l'ampoule 80. Il est possible également d'extraire axialement la lampe pour la changer.

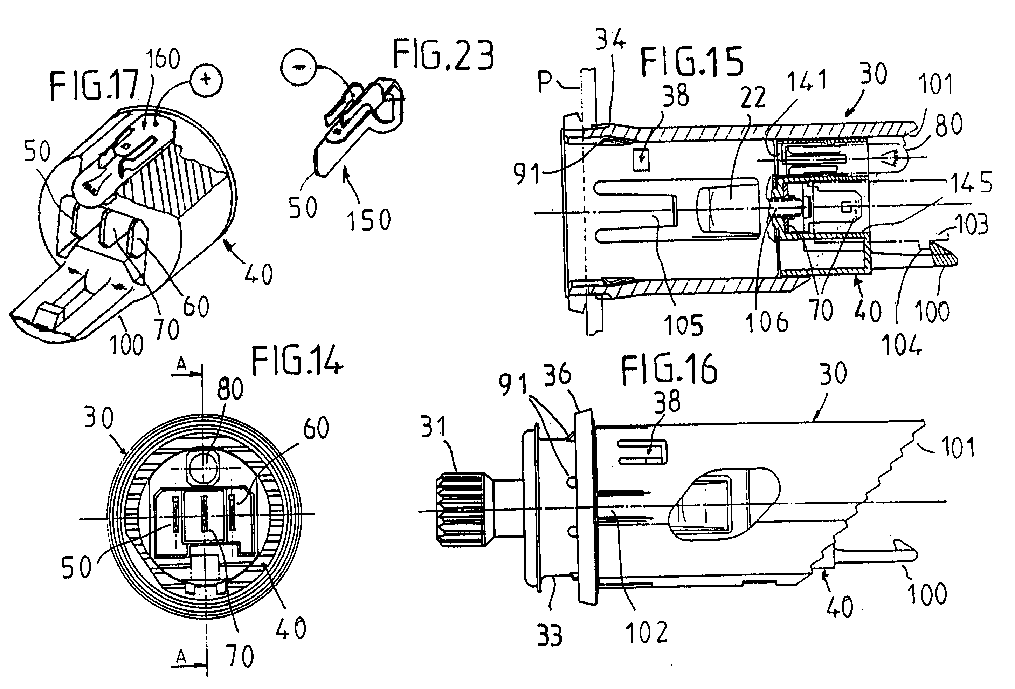

Avantageusement les pièces 50,60,70 appartiennent à un connecteur 40. Ce connecteur 40 présente un corps creux 45 pour logement des bras 50,60 et de la partie verticale 70 de la première cosse. Ce corps 45 a une forme cylindrique son diamètre extérieur étant au plus égal au diamètre externe du corps d'allumage 33. Ce corps 45 est en matière isolante et joue le rôle de l'une des rondelles 23 de la figure 1 en se substituant à celle-ci. Le connecteur 40 est donc solidaire du corps 33 par l'intermédiaire de l'organe de fixation du bilame 22 (voir 106 à la figure 15). Son fond est donc troué pour passage du bras 50, la partie horizontale 52 étant interposée radialement entre le fond 25 et le corps 45 traversant le trou 54 et le fond 25 comme dans la figure 1. Ce corps 45 présente une fente traversante pour montage de la pièce 60,61 à la manière d'un tiroir, ladite pièce 60,61 comportant pour ce faire une protubérance axiale 62 destinée à s'engager dans l'une des portions de la fente 43, tandis que la partie horizontale de la potence du bras 61 s'engage dans l'autre portion de la fente. La partie creuse du corps 45, formant cavité, est conformée pour former un détrompeur. Le corps 45 présente également deux bossages 42 (figures 5 et 6) propres à s'engager chacun dans une rainure complémentaire de la bague 30, pour formation d'un détrompeur.

La cosse 70 appartient à une plaquette métallique conductrice en forme d'équerre et, pour passage de la partie horizontale de la cosse 70, la pièce 60 présente un dégagement 67 dans l'alignement du bras 60 et dans la partie basse de la plaquette. Cette cosse 70 est fixée au bilame 22 de manière analogue à la figure 1, le corps 45 ayant une protubérance traversant l'ouverture 54 et le fond 25. Le fond du corps 45 forme une rondelle d'isolement et est donc interposé entre la partie 52 et la partie horizontale de la cosse 70.

Le corps 45 est échancré en 41 à l'extérieur de sa cavité servant de logement aux pièces 50,60,70. C'est dans cette échancrure 41 qu'est logée l'ampoule 80, la fente 43 débouchant dans cette échancrure. La profondeur de l'échancrure 41 est supérieure à la longueur de l'ampoule 80.

Ainsi qu'on l'aura compris, la paroi 46 séparant l'échancrure 41 de la cavité centrale du corps 45, est entaillée par la fente 43 pour passage de la partie horizontale de la potence du bras 51, l'épaisseur de ladite paroi 46 étant fonction de la largeur de la fente séparant les deux bras 51,50, tandis que le pli 63 permet une adaptation à la largeur de l'ampoule 80.

On notera, que les cosses 50,60,70 présentent toutes des languettes parallèles entre elles, la cosse 60 étant disposée centralement, et que l'ampoule 80 s'étend parallèlement auxdites languettes et axialement par rapport au corps 33 qui la porte.

Le connecteur 40 constitue un connecteur mâle propre à coopérer avec un connecteur femelle associé au faisceau d'alimentation de l'allume-cigares pour alimentation en énergie électrique de celui-ci et éclairage de l'ampoule 80.

Ainsi qu'il ressort à l'évidence de la description la pièce 60,61, réliée à la borne positive, est immobilisée par coopération de formes avec le corps 45 en étant isolée des cosses 50,70. C'est la raison pour laquelle, la partie 62 présente une entaille pour coopérer avec une patte de verrouillage formée dans le corps 45 au niveau de la fente 43. Cette pièce 60,61 est connectée au circuit électrique d'alimentation des lanternes du véhicule.

De même, il ressort à l'évidence de la description que le montage du corps d'allumage avec son ampoule 80 peut se faire par simple enfilage axial à travers le trou cylindrique 72 de la paroi P. Il devient même possible de créer un sous-ensemble corps 33-bague 30. Pour ce faire, le corps 33 présente des crans 90,91 échelonnés axialement. Les crans 90 sont destinés à coopérer avec les bossages 37 des pattes 34, tandis que les crans 91 sont destinés à coopérer avec la collerette 36.

Ainsi avant montage de l'allume-cigares sur la paroi P fixe du véhicule, il est possible en enfilant le corps 33 dans la bague 30 de créer un sous-ensemble bague 30-corps 33 grâce aux crans 90,91 permettant de prépositionner le corps 33 dans la bague 30, ainsi que la création de ce sous-ensemble. Lors du montage, on enfile d'abord axialement la bague 30 dans le trou 72, puis en final on vient repousser axialement le corps 33 à l'intérieur de la bague 30, les crans 91 soulevant les languettes 34.

On appréciera que l'invention ne nécessite pas de modifier la paroi fixe P, en particulier le trou 72, et qu'elle fait appel à un nombre de pièces réduites avec des plaquettes simples à usiner en permettant un montage automatique à l'aide d'un robot.

Bien entendu la présente invention n'est pas limitée aux exemples de réalisations décrits. En particulier il est possible d'inverser les structures, les cosses 50,60,70 pouvant consister en des cosses femelles au lieu des cosses mâles. De même la cosse 70 peut constituer la cosse d'alimentation de l'ampoule selon l'invention, la cosse 60 étant dans ce cas reliée à la masse. La présence d'un connecteur 40 n'est pas obligatoire, la rondelle 23 de la figure 1 pouvant être conformée pour comporter des saillies immobilisant la cosse 60.

L'ampoule peut s'étendre transversalement en étant disposée dans le contour transversal hors-tout de la partie principale du corps 33. Dans ce cas, il suffit de replier les bras 51,61, qui d'une manière générale peuvent être reliés à leur cosse correspondante par une attache ne s'étendant pas horizontalement comme dans les figures décrites.

La bague 30 et le corps 33 peuvent être par exemple cylindriques de section carrée, le trou 72 ayant alors une forme complémentaire de section carrée.

Il est possible d'inverser le sens des griffes. Ainsi, dans les figures 14 à 23, la lampe 80 a sa tête qui est accessible de l'extérieur et s'étend en saillie par rapport à l'extérieur du connecteur 40. Celui-ci peut alors entourer la lampe 80 (figure 14) en jouant le rôle de protecteur. Le démontage de la lampe 80 s'effectue en enfilant un tuyau souple sur celle-ci, puis en tirant.

On notera que la tête de la lampe 80 est alors plus éloignée de la collerette 36 et c'est la raison pour laquelle l'extrémité de la bague éclairante 30 est inclinée et présente des stries 101 pour bien renvoyer la lumière. La bague 30 présente donc une extrémité avancée recouvrant la lampe 80.

Le connecteur 40 présente ici une languette à crochet 100 pour son montage sur sa partie connectrice complémentaire 103, dotée d'un cran 104 à cet effet. La bague 30, outre les pattes 34, présente également des surépaisseurs locales 102 pour son positionnement sans jeu dans la paroi P. On voit en 105 l'une des pattes d'immobilisation du bouchon 31.

Comme précédemment, le corps d'allumage présente des bossages 91 propre à soulever les pattes 34. En position prémontée (figure 16), les bossages 91 font saillie par rapport à la collerette 36. Le montage s'effectue à l'aide d'un robot par enfilage de la bague 30, puis par enfoncement du corps 33, les bossages 91 soulevant alors les pattes 34 pour verrouillage de l'ensemble.

Dans cette variante, on voit à la figure 16 l'une des deux pattes ménagée dans la bague 30 et portant un bossage appartenant aux moyens d'immobilisation 38, ledit bossage coopérant avec un trou (visible à la figure 15) pratiqué dans le corps d'allumage 33 et appartenant également au moyens d'immobilisation 38. Pour démonter l'ensemble, il suffit donc d'introduire une pince dans les trous du corps (33) pour repousser les bossages et extraire le corps 33.

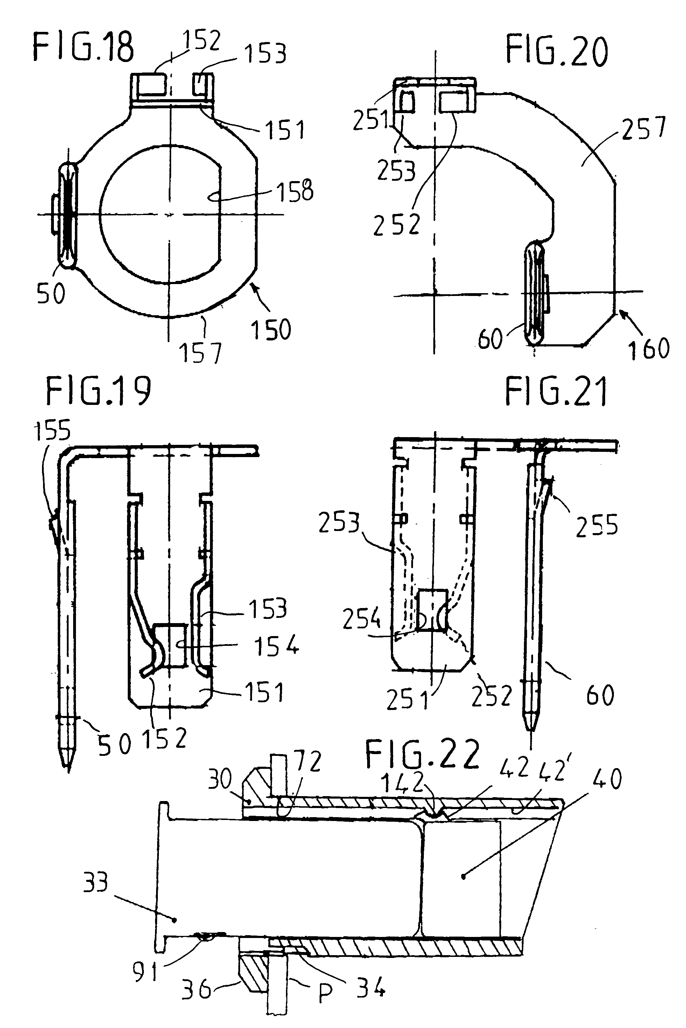

Dans ces figures, les moyens de prépositionnement entre la bague 30 et le corps 33, outre les bossages 91, comportent au moins un creux porté par le connecteur 40 et une bosse 142 portée par la bague 30 (figure 22). Ici, le creux appartient au bossage 42 du connecteur 40 propre à s'engager dans la rainure complémentaire 42' de la bague 30 (voir également figures 5 et 6) et un creux est associé à chaque bossage 42 ainsi qu'une patte 142. Ainsi, dans une première étape, on enfile axialement l'ensemble bouchon 31 - corps d'allumage 33 - bague éclairante 30 dans le trou 72 de la paroi P (figures 15,22), le corps 33 étant alors retenu par les bosses 142, puis dans un deuxième temps, on enfile le corps 33 à l'intérieur de la bague 30, les bossages 91 soulevant alors les pattes 34 (figure 15).

La cosse 50, reliée à la masse, appartient à une pièce 150 présentant à sa base une rondelle 157 interposée entre le fond du corps 33 et le fond du connecteur 40, doté d'un téton à méplat pénétrant de manière complémentaire dans l'ouverture centrale 158 à méplat de la rondelle 157. La pièce 150 est ainsi immobilisé en rotation par le connecteur 40, lui-même immobilisé en rotation par les bossages 42 coopérant avec les rainures 42'.

La cosse 50 consiste en une languette (ou bras) issue en saillie axiale (parallèlement à l'axe de l'allume-cigare) de la rondelle 157 à la faveur d'une excroissance périphérique de celle-ci.

Parallèlement à la languette 50, pourvue d'une saillie d'ancrage 155 pour ancrage dans le connecteur 40, s'étendent une patte de fixation 151, un bras élastique 152 formant griffe à son extrémité, et un bras d'immobilisation 153 de l'ampoule 80. Ainsi, il y a dissociation des griffes 55,56 de la figure 12, le bras élastique 152 formant griffe coopérant avec le fil d'alimentation de la lampe 80, tandis que le bras 153, également élastique, sert au maintien de l'ampoule 80.

La patte de fixation 151 est dotée d'un trou 154 pour coopération avec un bossage issu d'un connecteur 40 (figure 15, partie haute) et fixation de la pièce 150.

Les bras 152, 153 sont issus latéralement par pliage à 90° de la patte 151 et s'étendent au-dessus de celle-ci (figure 19). Cette patte 151 est décalée de 90° par rapport à la languette 50, et est issue également d'une excroissance périphérique de la rondelle 157.

La cosse 60, à saillie d'ancrage 255, est à l'image de la cosse 50 et est issue d'une pièce 160 avec une patte de fixation 251 à trou 254, un bras élastique 252 et un bras élastique d'immobilisation 253, comme la pièce 150. Ici, les bras 252, 253 sont également issus latéralement par pliage à 90° de la patte 251, mais s'étendent en dessous de celle-ci (figure 21).

Ces bras 252,253 et la patte 251 sont issus d'une partie arquée 257 perpendiculaire à l'axe de l'allume-cigares , la cosse 60 étant connectée, comme dans les figures précédentes, aux lanternes du véhicule (à la partie positive du circuit de celles-ci).

La pièce 160 est introduite par le dessous du connecteur 40, ici creux notamment dans la cavité 141 de logement de la lampe 80, et est maintenue à distance du fond du corps 33. La languette 60 traverse le fond de la partie connectrice 145 proprement dit, tout comme la languette 50, tandis que la languette 70, en forme d'équerre, est au contact dudit fond.

Les pièces 150,160 sont maintenues dans le connecteur, d'une part, par les trous 154,254 des pattes 151,251 et, d'autre part, par les languettes 155,255 ancrées dans le fond de la partie connectrice.

On notera que la cavité 141 de logement de la lampe 80 est ouverte en direction du corps 33 et à son autre extrémité présente une ouverture pour passage de la lampe et du tuyau de démontage de celle-ci. La lampe 80 est ainsi protégée.

Une fois montée, la lampe est pincée à sa base, du côté du corps 33 entre les languettes 152, 153 et 252,253 montées en vis-à-vis, les languettes 152,153 étant les plus proches de la partie centrale connectrice 145.

Bien entendu, on peut inverser le rôle des bras 152,153 et 252,253. De même, dans tous les cas, on peut monter un disjoncteur thermique réarmable dans le circuit électrique de l'allumage, par exemple une résistance dite PTC dont la résistance croît brusquement en fonction de la température et/ou du courant.

## Revendications

1. Corps d'allumage pour allume-cigares, notamment pour véhicules automobiles, du genre comportant, pour son alimentation en énergie électrique, une première (70) et une seconde (50) cosses, caractérisé en ce qu'il porte une ampoule d'éclairage (80) avec ses deux pièces d'alimentation électrique (51,61,150,160), en ce que ladite ampoule (80) et ses deux dites pièces d'alimentation (51,61,150,160) sont implantées au voisinage de la première (70) et de la seconde (50) cosses, à l'intérieur du contour transversal hors-tout de la partie principale du corps d'allumage (33), et en ce que l'une des première (70) et seconde (50) cosses d'alimentation électrique est prolongée pour constituer l'une des pièces d'alimentation électrique de l'ampoule (80).

2. Corps d'allumage selon la revendication 1, caractérisé en ce que ladite pièce d'alimentation associée à l'une des première (70) et seconde (50) cosses comporte un bras élastique (51,152), dit premier bras (51,152).

3. Corps d'allumage selon la revendication 2, caractérisé en ce que l'autre pièce d'alimentation électrique de l'ampoule (80) présente un bras élastique (61,252) de forme analogue au premier bras (51,152).

4. Corps d'allumage selon la revendication 2 ou 3, caractérisé en ce que ledit bras élastique présente une extrémité libre en forme de griffe.

5. Corps d'allumage selon la revendication 2 ou 4, caractérisé en ce que le premier bras (51) appartient à une potence reliée à la première (70) ou seconde (50) cosse concernée.

6. Corps d'allumage selon la revendication 5, dans lequel la première (70) et la seconde (50) cosses présentent des languettes, caractérisé en ce que le premier bras (51) appartient à une plaquette métallique conductrice comportant deux bras (50,51) parallèles entre eux, le bras (51) d'alimentation électrique de l'ampoule (80) ayant une largeur moindre que l'autre formant ladite cosse.

7. Corps d'allumage selon la revendication 4, caractérisé en ce que le bras (61) de l'autre pièce d'alimentation électrique de l'ampoule (80) appartient à une potence formée dans une plaquette métallique conductrice comportant deux bras parallèles entre eux, dont l'un (61) constitue un bras d'alimentation électrique pour l'ampoule (80), et l'autre (60) une cosse.

8. Corps d'allumage selon l'une quelconque des revendications 2 à 5, caractérisé en ce que le premier bras (152) appartient à une patte de fixation (151) s'étendant parallèlement à la cosse (50) concernée en forme de languette.

9. Corps d'allumage selon la revendication 8, caractérisé en ce que la patte de fixation (151) porte un bras d'immobilisation (153) de l'ampoule (80).

10. Corps d'allumage selon la revendication 9, caractérisé en ce que le premier bras (152) et le bras d'immobilisation (153) sont issus latéralement par pliage à 90° de la patte de fixation et s'étendent au-dessus de celle-ci et en ce que le premier bras (152) forme une griffe à son extrémité pour coopérer avec le fil d'alimentation de la lampe (80), tandis que le bras d'immobilisation (153) est également élastique et sert de maintien à la lampe (80).

11. Corps d'allumage selon l'une quelconque des revendications 8 à 10, caractérisé en ce que la cosse (50) en forme de languette et la patte de fixation (151) appartiennent à une pièce (150) présentant à sa base une rondelle (157) et en ce que la patte de fixation (151) est décalée de 90° par rapport à ladite languette (50) et est issue, tout comme ladite languette (50), d'une excroissance périphérique de la rondelle (157).

12. Corps d'allumage selon l'une quelconque des revendications 8 à 11, caractérisé en ce que l'autre pièce (60) d'alimentation électrique de l'ampoule (80) est à l'image de la pièce (150) à cosse (50) et à premier bras (152) et comporte une patte de fixation (251), un bras élastique d'alimentation électrique (252) et un bras élastique d'immobilisation (253).

13. Corps d'allumage selon la revendication 12, caractérisé en ce que lesdits bras (252,253) et ladite patte (251) sont issus d'une partie arquée perpendiculaire à l'axe du corps d'allumage et en ce que lesdits bras (252,253) s'étendent en dessous de ladite patte de fixation (251).

14. Corps d'allumage selon les revendications 3 à 13, caractérisé en ce que l'ampoule (80) est immobilisée par lesdits bras élastiques de ses dites pièces d'alimentation électriques.

15. Corps d'allumage selon l'une quelconque des revendications 3 à 14, dans lequel le corps d'allumage (33) porte intérieurement à fixation un bilame (22) par l'intermédiaire d'une rondelle d'isolement (23) et d'un organe de fixation (106), ainsi qu'extérieurement un connecteur (40) mâle, en matière isolante, solidaire dudit corps (33) par l'intermédiaire dudit organe de fixation (106), l'une (70) desdites cosses (50,70) étant interposée entre le fond (25) du corps d'allumagne (33) et le connecteur (40), caractérisé en ce que les bras élastiques (51,61,152,252) des pièces d'alimentation électriques (51,61,150,160), la première (70) et seconde (50) cosses dépourvues du bras d'alimentation sont montées dans un corps creux isolant du connecteur (40).

16. Corps d'allumage selon l'une quelconque des revendications 3 à 7 et la revendication 15, caractérisé en ce que le corps creux (45) du connecteur (40) présente une échancrure (41) pour logement de l'ampoule (80) avec ses deux bras d'alimentation électrique (51,61), et en ce que ladite échancrure (41) est délimitée par une paroi (46) séparant ladite échancrure (41) de la cavité du corps creux (45), ladite paroi (46) étant fendue pour passage de l'attache du bras (61) à la première (70) ou deuxième (50) cosse concernée.

17. Corps d'allumage selon l'une quelconque des revendications 8 à 13 et la revendication 15, caractérisé en ce que le connecteur (40) présente une cavité (141) de logement de la lampe (80) et en ce que ladite lampe (80) s'étend en saillie par rapport à l'extérieur du connecteur (40) en sorte qu'elle est accessible de l'extérieur.

18. Ensemble corps d'allumage (33) et bague éclairante (30), caractérisé en ce qu'il comporte un corps d'allumage (33) selon l'une quelconque des revendications 1 à 17, et en ce que des moyens de prépositionnement sont prévus entre ledit corps d'allumage (33) et la bague éclairante (30).

19. Ensemble corps d'allumage (33) et bague éclairante (30) selon la revendication 18, caractérisé en ce que l'extrémité de la bague éclairante (30) est inclinée et présente des stries (101) pour bien renvoyer la lumière en sorte que ladite bague (30) présente une extrémité avancée recouvrant la lampe (80).

20. Procédé de montage d'un ensemble comprenant une bague éclairante (30) et un corps d'allumagne (33) selon l'une quelconque des revendications 1 à 19, à travers un trou complémentaire (72) d'une paroi (P), caractérisé en ce que, dans une première étape, on enfile axialement ladite bague (30) dans le trou (72), puis dans une deuxième étape, on repousse le corps d'allumage (33) à l'intérieur de la bague (30).

## Patentansprüche

1. Zigarettenanzünderkörper, insbesonderere für Kraftfahrzeuge, für die Versorgung mit elektrischer Energie enthaltend eine erste (70) und eine zweite (50) Kausche, **dadurch gekennzeichnet**, daß er eine Glühbirne (80) mit ihren beiden Stromzuführteilen (51, 61, 150, 160) trägt, daß die genannte Glühbirne (80) und ihre beiden genannten Stromzuführteile (51, 61, 150, 160) in Nähe der ersten (70) und der zweiten ( 50) Kausche im Innern der Gesamt-Querkontur des Hauptteils des Zündkörpers (33) eingebaut sind und daß eine der ersten (70) und zweiten (50) Kauschen für die Stromzuführung so verlängert ist, daß eines der Stromzuführteile für die Glühbirne (80) entsteht.

2. Zündkörper nach Anspruch 1, **dadurch gekennzeichnet**, daß das genannte, mit der ersten (70) oder zweiten (50) Kausche einhergehende Stromzuführteil einen elastischen Arm (51, 152) aufweist, der als erster Arm (51, 152) bezeichnet wird.

3. Zündkörper nach Anspruch 2, **dadurch gekennzeichnet**, daß das andere Stromzuführteil für die Glühbirne (80) einen elastischen Arm (61, 252) aufweist, dessen Form der des ersten Arms (51, 152) entspricht.

4. Zündkörper nach Anspruch 2 oder 3, **dadurch gekennzeichnet**, daß der genannte elastische Arm ein klemmenförmiges freies Ende aufweist.

5. Zündkörper nach Anspruch 2 oder 4, **dadurch gekennzeichnet,** daß der erste Arm (51) zu einem Ausleger gehört, der mit der betreffenden ersten (70) oder zweiten (50) Kausche verbunden ist.

6. Zündkörper nach Anspruch 5, bei dem die erste (70) und die zweite (50) Kausche Zungen aufweisen, **dadurch gekennzeichnet**, daß der erste Arm (51) zu einer leitfähigen Metallplatte mit zwei parallel verlaufenden Armen (50, 51) gehört, während der Stromzuführarm (51) für die Glühbirne (80) eine geringere Breite besitzt als der andere, der die genannte Kausche bildet.

7. Zündkörper nach Anspruch 4, **dadurch gekennzeichnet**, daß der Arm (61) des anderen Stromzuführteils für die Glühbirne (80) zu einem Ausleger gehört, der in einer leitfähigen Metallplatte mit zwei parallel zueinander verlaufenden Armen ausgebildet ist, von denen der eine (61) einen Stromzuführarm für die Glühbirne (80) und der andere (60) eine Kausche bildet.

8. Zündkörper nach einem der Ansprüche 2 bis 5, **dadurch gekennzeichnet**, daß der erste Arm (152) zu einer Befestigungsklammer (151) gehört, die sich parallel zu der betreffenden zungenförmigen Kausche (50) erstreckt.

9. Zündkörper nach Anspruch 8, **dadurch gekennzeichnet**, daß die Befestigungsklammer (151) einen Verriegelungsarm (153) für die Glühbirne (80) trägt.

10. Zündkörper nach Anspruch 9, **dadurch gekennzeichnet**, daß der erste Arm (152) und der Verriegelungsarm (153) seitlich durch 90°-Falzung von der Befestigungsklammer ausgehen und sich oberhalb derselben erstrecken und daß der erste Arm (152) am Ende eine Klemme für das Zusammenwirken mit dem Zuführdraht der Glühbirne (80) bildet, während der Verriegelungsarm (153) ebenfalls elastisch ist und die Glühbirne (80) an ihrem Platz festhält.

11. Zündkörper nach einem der Ansprüche 8 bis 10, **dadurch gekennzeichnet**, daß die zungenförmige Kausche (50) und die Befestigungsklammer (151) zu einem Teil gehören, welches unten eine Scheibe (157) aufweist, und daß die Befestigungsklammer (151) im Verhältnis zur genannten Zunge (50) um 90° versetzt ist und, ebenso wie die genannte Zunge (50), von einer Umfangsausstülpung der Scheibe (157) ausgeht.

12. Zündkörper nach einem der Ansprüche 8 bis 11, **dadurch gekennzeichnet**, daß das andere Stromzuführteil (60) für die Glühbirne (80) dem Teil (150) mit Kausche (50) und erstem Arm (152) entspricht und eine Befestigungsklammer (251), einen elastischen Stromzuführarm (252) sowie einen elastischen Verriegelungsarm (253) aufweist.

13. Zündkörper nach Anspruch 12, **dadurch gekennzeichnet**, daß die genannten Arme (252, 253) und die genannte Klammer (251) von einem lotrecht zur Achse des Zündkörpers verlaufenden bogenförmigen Teil ausgehen und daß sich die genannten Arme (252, 253) unterhalb der genannten Befestigungsklammer (251) erstrecken.

14. Zündkörper nach den Ansprüchen 3 bis 13, **dadurch gekennzeichnet**, daß die Glühbirne (80) durch die genannten elastischen Arme ihrer genannten Stromzuführteile an ihrem Platz festgehalten wird.

15. Zündkörper nach einem der Ansprüche 3 bis 14, wobei der Zündkörper (33) innen ein mit einer Isolierscheibe (23) und einem Besfestigungsorgan (106) befestigtes Bimetallelement (22) und außen ein Verbindungsstück (40) mit Außengewinde aus Isoliermaterial trägt, welches fest mit dem genannten Körper (33) über das genannte Besfestigungsorgan (106) verbunden ist, wobei eine (70) der genannten Kauschen (50, 70) zwischen dem Boden (25) des Zündkörpers (33) und dem genannten Verbindungsstück (40) eingesetzt ist, **dadurch gekennzeichnet**, daß die elastischen Arme (51, 61, 152, 252) der Stromzuführteile (51, 61, 150, 160), die erste (70) und zweite (50) Kausche ohne Zuführarm in einem hohlen Isolierkörper des Verbindungsstück (40) eingebaut sind.

16. Zündkörper nach einem der Ansprüche 3 bis 7 und nach Anspruch 15, **dadurch gekennzeichnet**, daß der Hohlkörper (45) des Verbindungsstücks (40) eine Aussparung (41) für die Aufnahme der Glühbirne (80) mit ihren beiden Stromzuführungsarmen (51, 61) aufweist und daß die genannte Aussparung (41) durch eine Wand (46) begrenz wird, die die genannte Aussparung (41) vom Hohlraum des Hohlkörpers (45) trennt, wobei die genannte Wand (46) für den Durchtritt der Befestigung des Arms (61) an der ersten (70) oder zweiten (50) betreffenden Kausche gespalten ist.

17. Zündkörper nach einem der Ansprüche 8 bis 13 und nach Anspruch 15, **dadurch gekennzeichnet**, daß das Verbindungsstück (40) einen Hohlraum (141) für die Aufnahme der Lampe (80) aufweist und daß die genannte Lampe (80) außen am Verbindungsstück (40) so vorspringt, daß sie von außen zugänglich ist.

18. Zündkörpereinheit (33) mit Leuchtring (30), **dadurch gekennzeichnet**, daß sie einen Zündkörper (33) nach einem der Ansprüche 1 bis 17 enthält und daß zwischen dem genannten Zündkörper (33) und dem Leuchtring (33) Vorpositioniermittel vorgesehen sind.

19. Zündkörpereinheit (33) mit Leuchtring (30) nach Anspruch 18, **dadurch gekennzeichnet**, daß das Ende Leuchtrings (30) geneigt ist und Rillen (101) aufweist, um das Licht richtig zurückwerfen, so daß der genannten Ring (30) ein vorstehendes Ende zur Abdeckung der Lampe (80) aufweist.

20. Verfahren zum Einbau einer Einheit bestehend aus einem Leuchtring (30) und einem Zündkörper (33) nach einem der Ansprüche 1 bis 19 durch ein ergänzendes Loch (72) in einer Wand (P), **dadurch gekennzeichnet,** daß in einer ersten Stufe der genannte Ring (30) in das Loch (72) axial eingeführt und einer zweiten Stufe dann der Zündkörper (33) in das Innere des Rings eingeschoben wird.

## Claims

1. A lighter body for a cigarette lighter, especially for motor vehicles, of the kind that includes, for supplying it with electrical energy, a first spade terminal (70) and a second spade terminal (50), characterised in that it carries a light bulb (80) with its two electrical supply members (51, 61, 150, 160), in that the said bulb (80) and its two said supply members (51, 61, 150, 160) are fitted close to the first spade terminal (70) and the second spade terminal (50), within the transverse contour that bounds the main part of the lighter body (33), and in that one of the said first and second electrical supply spade terminals (70, 50) is extended so as to constitute one of the electrical supply members for the bulb (80).

2. A lighter body according to Claim 1, characterised in that the said supply member associated with the first spade terminal (70) or the second spade terminal (50) comprises a resilient arm (51, 152), referred to as a first arm (51, 152).

3. A lighter body according to Claim 2, characterised in that the other electrical supply member for the bulb (80) has a resilient arm (61, 252), the shape of which is similar to that of the first arm (51, 152).

4. A lighter body according to Claim 2 or Claim 3, characterised in that the said resilient arm has a free end in the form of a claw.

5. A lighter body according to Claim 2 or Claim 4, characterised in that the first arm (51) is part of a projecting element which is joined to the relevant one of the first spade terminal (70) and second spade terminal (50).

6. A lighter body according to Claim 5, in which the first spade terminal (70) and the second spade terminal (50) are formed with tongues, characterised in that the first tongue (51) is part of a conductive metallic plate which includes two arms (50, 51) parallel to each other, the electrical supply arm (51) for the bulb (80) having a width which is smaller than that of the other arm constituting the said spade terminal.

7. A lighter body according to Claim 4, characterised in that the arm (61) of the other electrical supply member for the bulb (80) is part of a projecting element which is formed in a conductive metallic plate that comprises two arms parallel to each other, one of which (61) constitutes an electrical supply arm for the bulb (80), the other one (60) being a spade terminal.

8. A lighter body according to any one of Claims 2 to 5, characterised in that the first arm (152) is part of a securing lug (151) which extends parallel to the relevant spade terminal (50) in the form of a tongue.

9. A lighter body according to Claim 8, characterised in that the securing lug (151) carries a retaining arm (153) for immobilising the bulb (80).

10. A lighter body according to Claim 9, characterised in that the first arm (152) and the retaining arm (153) project laterally by being bent at 90 degrees to the securing lug, and extend above the latter, and in that the first arm (152) defines a claw at its extremity for cooperating with the supply wire for the lamp (80), while the retaining arm (153) is also resilient and serves to retain the lamp (80) in position.

11. A lighter body according to any one of Claims 8 to 10, characterised in that the tongue shaped spade terminal (50) and the securing lug (151) are part of a member (150) which includes a ring (157) at its base, and in that the securing lug (151) is offset by 90 degrees with respect to the said tongue (50) and projects, like the said tongue (50), from an enlarged peripheral element of the ring (157).

12. A lighter body according to any one of Claims 8 to 11, characterised in that the other electrical supply member (60) for the bulb (80) is made in the image of the member (150) having the spade terminal (50) and the first arm (152), and comprises a securing lug (251), a resilient electrical supply arm (252) and a resilient retaining arm (253).

13. A lighter body according to Claim 12, characterised in that the said arms (252, 253) and the said lug (251) project from a portion which is arched at right angles to the axis of the lighter body, and in that the said arms (252, 253) extend below the said securing lug (251).

14. A lighter body according to Claims 3 to 13, characterised in that the bulb (80) is retained in position by the said resilient arms of its said electrical supply members.

15. A lighter body according to any one of Claims 3 to 14, in which the lighter body (33) carries internally a twin-leafed spring clip (22), through an insulating ring (23) and a fastening member (106), and externally a male connector (40) of insulating material, which is secured to the said body (33) by means of the said fastening member (106), with one (70) of the said spade terminals (50, 70) being interposed between the base (25) of the lighter body (33) and the connector (40), characterised in that the resilient arms (51, 61, 152, 252) of the electrical supply members (51, 61, 150, 160), together with the first spade terminal (70) and the second spade terminal (50), from which the supply arm is absent, are mounted in an insulating hollow body of the connector (40).

16. A lighter body according to any one of Claims 3 to 7 and Claim 15, characterised in that the hollow body (45) of the connector (40) has a slot (41) for accommodating the bulb (80) with its two electrical supply arms (51, 61), and in that the said slot (41) is delimited by a wall (46) separating the said slot (41) from the cavity of the hollow body (45), the said wall (46) being slotted for passage of the attachment means attaching the arm (61) to the appropriate first spade terminal (70) or second spade terminal (50).

17. A lighter body according to any one of Claims 8 to 13 and Claim 15, characterised in that the connector (40) has a cavity (141) for accommodating the lamp (80), and in that the said lamp (80) extends in projecting relationship with respect to the outside of the connector (40), so that it is accessible from outside.

18. An assembly comprising a lighter body (33) and an illuminating ring (30), characterised in that it includes a lighter body (33) according to any one of Claims 1 to 17, and in that pre-positioning means are provided between the said lighter body (33) and the illuminating ring (30).

19. An assembly consisting of a lighter body (33) and an illuminating ring (30) according to Claim 18, characterised in that the end of the illuminating ring (30) is inclined and is formed with ribs (101), for effectively transmitting the light in such a way that the said ring (30) has a front end covering the lamp (80).

20. A method of making an assembly comprising an illuminating ring (30) and a lighter body (33) according to any one of Claims 1 to 19, through a complementary hole (72) of a wall (P), characterised in that, in a first step of the method, the said ring (30) is inserted axially into the hole (72), and then in a second step the lighter body (33) is pushed into the ring (30).
